# DEMANDE DE BREVET EUROPEEN

(11) **EP 1 056 000 A1**
(43) Date de publication de la demande: **29.11.2000**
(21) Numéro de dépôt: 00401346.2
(22) Date de dépôt: 17.05.2000
(51) Int. Cl.: G06F 9/44

(54) **Procédé de commande, à partir d'un tableau de bord d'une station cliente, d'un processus s'exécutant sur un serveur**

(30) Priorité: 21.05.1999 FR 9906520
(71) Demandeur: BULL S.A., 78434 Louveciennes Cedex (FR)
(72) Inventeur: Baillif, Christian, 92340 Bourg la Reine (FR); Lassabe, Serge, 92150 Suresne (FR); Leyques, François, 75004 Paris (FR)
(74) Mandataire: Denis, Hervé

(57) **Abrégé**

Le processus d'une application (31) est commandé par un lanceur (37) et attaché à une interface graphique (67) incluant dans le serveur (17a) un serveur graphique (68) connecté à un écran (62) et dans la station cliente (61) un client graphique (69) attaché à l'application. Le procédé consiste à définir dans le serveur un service (77) lanceur de fonctions de commande connues du tableau de bord (64) et adaptées à la commande du lanceur, à envoyer au service (77), à partir du tableau de bord et à travers un canal (76), la commande du processus, et à donner au client graphique (69) l'adresse du serveur graphique (68) pour que le serveur graphique produise sur l'écran un affichage de données relatives au processus.

## Description

### Domaine technique.

L'invention a pour objet un procédé de commande, à partir d'un tableau de bord d'une station cliente, d'un processus s'exécutant sur un serveur. Elle a pour objets corollaires une interface homme-machine et un système informatique de type client-serveur mettant en oeuvre ce procédé. L'exemple illustrant l'invention portera sur un système informatique et un système d'administration d'au moins une ressource de ce système, telle qu'une machine, un réseau ou une application. Une application étant faite d'au moins un processus, l'exemple de processus portera sur des applications destinées à l'administration.

### L'art antérieur.

Une interface homme-machine traditionnelle utilisée pour la commande d'applications comprend dans le serveur d'administration un tableau de bord contenant des icônes représentatives des applications et dans le client un écran et un serveur graphique. Le serveur graphique et le tableau de bord fonctionnent sous un système d'exploitation ouvert connu et adapté à un affichage graphique, tel que le système UNIX MOTIF®. Des interfaces graphiques, souvent appelées interfaces GUI (Graphic User Interface) et adaptées à ce système, relient le serveur graphique à, respectivement, le tableau de bord et chacune des applications. Sur l'écran peut ainsi apparaître la partie graphique du tableau de bord, avec ses icônes. Il suffit qu'un utilisateur clique sur une icône pour que le tableau de bord lance l'application correspondante. De même, l'application lancée peut envoyer ses données au serveur graphique pour l'affichage des données sur l'écran.

L'évolution rapide des logiciels et de la technologie des réseaux conduit à adopter des interfaces graphiques homme-machine beaucoup plus performantes que celle de l'exemple classique précédent et mieux adaptée à l'environnement actuel. C'est ainsi que les réseaux interconnectés de forte densité et de grande étendue, tels que les réseaux internet et intranet, de la Toile (Web) ont fait apparaître les besoins de s'y connecter et d'utiliser les composantes qui leur sont adaptés, telles que le langage connu sous le nom de marque déposé Java. Dans ce cadre, il s'avère nécessaire d'utiliser le langage Java® dans une interface graphique homme-machine.

La substitution de l'interface homme-machine traditionnelle par une interface Java® pose des problèmes majeurs. Une interface homme-machine Java® comprend un écran, un navigateur, un tableau de bord adapté à Java® et attaché à des classes d'objets qui permettent de construire et de présenter un tableau de bord graphique, et un module d'activation, nommé "Bean Activator" et adapté à Java®, permettant de lancer des applications dans le serveur d'administration si leurs interfaces graphiques sont écrites en Java et d'afficher les données que ces interfaces graphiques lui retournent. Toutes les interfaces graphiques GUI traditionnelles doivent donc être remplacées par des interfaces GUI écrites en langage Java® pour utiliser une interface Java®. Compte tenu de la spécificité des applications, certaines étant complexes et de grand contenu comme par exemple les applications gérant les alarmes, la sécurité et d'aide en ligne, la génération de chacune des interfaces graphiques dans le langage Java est coûteuse en temps et en argent. De plus, l'évolution rapide des applications nécessite une adaptation rapide des interfaces correspondantes. De surcroît, les producteurs des applications sont hétérogènes, de sorte que l'évolution de certaines applications peut s'avérer indépendante de celles du producteur du système d'administration et ne peut pas être maîtrisée. À cela s'ajoute encore le grand nombre d'applications, qui est actuellement de l'ordre d'une quarantaine pour le seul produit nommé "Application Governor" dans le système d'administration OpenMaster® du demandeur.

Actuellement, la seule solution serait donc de faire cohabiter, dans une station cliente Java® pour traiter les applications adaptées à Java®, un serveur graphique classique tel que UNIX MOTIF® pour traiter les applications non encore adaptées à Java®. Plusieurs éditeurs vendent actuellement des produits fournissant la partie serveur de UNIX MOTIF® pour plate-forme de type ordinateur personnel ou type PC. Le serveur graphique permettrait l'affichage, sur l'écran de la station cliente, du tableau de bord du serveur et des applications non encore reliées à des interfaces graphiques non encore écrites en Java®. Cependant, il n'existe aucun lien entre le navigateur de réseau utilisé par la station Java® et le serveur UNIX MOTIF®. Cependant, l'utilisation d'une interface mixte homme-machine s'avère en pratique lourde et difficile. Il faut savoir quelles sont les applications déjà converties en Java® parmi les nombreuses applications disponibles, le nombre des applications converties grandissant avec le temps. De plus, si on veut qu'une application soit sensible au contexte, il faut utiliser le tableau de bord qui correspond à l'application concernée pour la sélectionner et obtenir les données qu'elle retourne. Cela se traduit donc par une gestion sélective et évolutive de deux tableaux de bord chacun très riches en icônes et en commandes pour faire l'administration d'un système aussi lourd que par exemple un système informatique distribué.

### Sommaire de l'invention.

Un premier but de l'invention consiste en un procédé permettant de commander, à partir d'un tableau de bord d'une station cliente, un processus non adapté au tableau de bord, sans utiliser dans la station cliente un tableau de bord adapté au processus. Par exemple, le procédé permet de commander, à partir d'une station cliente basée sur le langage Java®, des processus adaptés à ce langage ainsi que des processus adaptés à une autre interface graphique telle que UNIX MOTIF. Par conséquent, la commande des processus adaptés ou non est transparente à l'utilisateur.

Un second but de l'invention est de rendre le processus non adapté sensible au contexte.

Un troisième but de l'invention consiste, dans le cas où un processus non adapté crée un menu, à reproduire le menu dans le tableau de bord et pouvoir l'activer à partir du tableau de bord.

L'invention a pour objet un procédé de commande, à partir d'un tableau de bord sur un écran d'une station cliente, d'un processus s'exécutant sur un serveur, le processus étant commandé par un lanceur et attaché à une interface graphique incluant dans le serveur un serveur graphique connecté audit écran et dans la station cliente un client graphique attaché au processus, caractérisé en ce que le tableau de bord étant adapté à la commande directe de processus autres que ledit processus et étant incompatible avec le lanceur et l'interface graphique du processus, il consiste à définir dans le serveur un service lanceur de fonctions de commande connues du tableau de bord et adaptées à la commande du lanceur, à établir un canal de communication entre la station cliente et le serveur, le canal permettant un dialogue entre le tableau de bord et le service, à envoyer au service, à partir du tableau de bord et à travers le canal, la commande du processus, à traiter dans le service la commande pour la faire exécuter par le lanceur, et à donner au client graphique l'adresse du serveur graphique pour que le serveur graphique produise sur l'écran un affichage de données relatives au processus.

L'invention a aussi pour objets corollaires une interface homme-machine entre une station cliente et un serveur, l'interface mettant en oeuvre le procédé, ainsi qu'un .système informatique incluant au moins un serveur destiné à exécuter un processus par au moins un processeur à partir d'un tableau de bord d'une station cliente, le système mettant en oeuvre le procédé.

### Présentation des dessins.

- La figure 1 est une vue synoptique d'un système d'administration d'un système informatique, le système d'administration mettant en oeuvre le procédé de l'invention.
- La figure 2 est une vue synoptique détaillée de la structure d'une plate-forme d'administration du système d'administration représenté sur la figure 1, le serveur incorporant la plate-forme étant connecté à une interface homme-machine représentée sous forme d'un bloc par un trait en pointillé.
- La figure 3 est une vue schématique partielle du serveur représenté sur la figure 2 et une vue schématique d'une structure classique de l'interface homme-machine représentée sur la figure 2.
- La figure 4 est une vue schématique partielle du serveur représenté sur la figure 2 et une vue schématique d'un exemple de structure d'une interface homme-machine permettant la mise en oeuvre du procédé de l'invention.
- La figure 5 est un organigramme illustrant un exemple de fonctionnement de la station cliente constituant l'interface homme-machine représentée sur la figure 4.
- La figure 6 est un organigramme illustrant un exemple de fonctionnement du service lanceur incorporé au serveur représenté sur la figure 4 et impliqué par le procédé de l'invention.
- La figure 7 est une vue similaire à celle de la figure 4 et illustrant un exemple de structure du serveur et d'une interface homme-machine permettant la mise en oeuvre d'une variante perfectionnée du procédé conforme à l'invention.
- La figure 8 est un organigramme illustrant des étapes pouvant s'ajouter à celles du service lanceur illustrées dans l'organigramme de la figure 6 pour l'exécution dans la structure de la figure 4 de la variante perfectionnée du procédé conforme à l'invention.
- Et la figure 9 est un organigramme illustrant un exemple de fonctionnement du module d'activation de la structure de la figure 7 pour la mise en oeuvre de la variante perfectionnée du procédé conforme à l'invention.

### Description détaillée d'exemples illustrant l'invention.

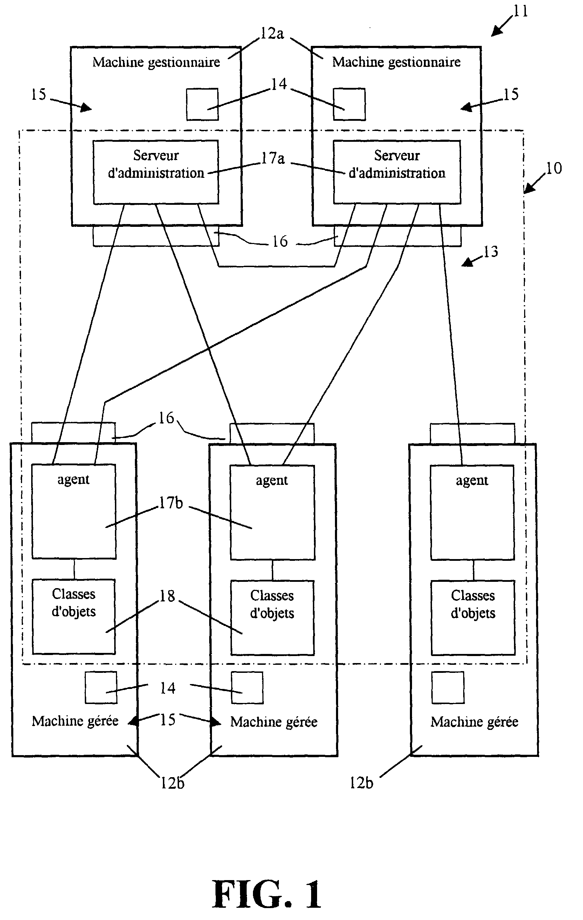

La figure 1 représente un système d'administration 10 d'un système informatique 11. L'exemple qui suit se rapporte au système d'administration et de sécurité connu sous le nom de marque déposée OpenMaster du demandeur. Sa conception est conforme aux normes ISO de l'administration de systèmes et réseaux. Dans ces conditions, les termes utilisés seront conformes à cette norme, qui sont de langue anglaise, notamment les sigles et acronymes. D'autre part, les verbes "administrer" et "gérer^{"} et leurs dérivés qui seront employés ici traduisent tous deux indifféremment le verbe anglais "manage" et ses dérivés. L'homme du méfier connaît bien ces normes. Compte tenu de leur masse informative, on ne donnera ici que les éléments nécessaires à la compréhension de l'invention.

Le système informatique illustré 11 est distribué et composé de machines 12 (12a, 12b) organisées en un ou plusieurs réseaux 13. Une machine est une unité conceptuelle très large, de nature matérielle et logicielle, pouvant être les moyens impliqués pour exécuter une application donnée, des moyens pour exécuter une fonction donnée, un ordinateur, ainsi qu'un système informatique dans une architecture à systèmes en cascade. Les machines 12 peuvent être donc très diverses, telles que stations de travail, serveurs, routeurs, machines spécialisées et passerelles entre réseaux. Le système informatique 11 est ordinairement un système comprenant plusieurs processeurs 14, un processeur 14 étant par exemple illustré dans chaque machine 12, des moyens de mémoire 15 pour contenir les logiciels et les données du système, et des moyens d'entrée-sortie 16 servant pour la communication entre machines par l'intermédiaire du réseau 13 à l'aide de protocoles divers, ainsi que pour une ou plusieurs communications extérieures, par exemple pour l'impression, la télécopie, etc. Un tel système peut par exemple gérer des données à distance, distribuer des données dans le cas d'un système de réservation, commander l'exécution de programmes à distance sur des machines spécialisées, partager localement des ressources physiques ou logicielles, et communiquer.

Le système informatique 11 de la figure 1 se compose de moyens matériels ou logiciels, réels ou virtuels, tels que machines, imprimantes, circuits virtuels et applications. Le système d'administration 10 utilise ces moyens selon un modèle de données orienté objets, dont on connaît les principales caractéristiques : classes, objets, héritage, encapsulation, méthodes (ici actions) et événements. L'organisation des classes dans l'exemple choisi du système 10 est hiérarchique. On distingue : l'arbre des classes, une classe étant définie en subordination à une ou plusieurs classes mères ; et l'arbre des instances, une instance étant attachée à une ou plusieurs instances mères. En particulier, une classe est définie par des caractéristiques nommées attributs, tels qu'un nom d'un composant du système et un état d'impression. Un objet d'une classe sera appelé une instance de la classe. Dans l'exemple choisi, les moyens du système informatique 11 sont donc convertis en classes d'objets organisées hiérarchiquement dans une base d'informations d'administration MIB (Management Information Base). Cette base n'est pas une base de données proprement dite, mais est assimilable à un catalogue de caractéristiques puisqu'elle contient la description et le contenu de toutes les classes gérées par le système d'administration 10. Dans la base MIB, les objets sont divisés en classes d'objets gérés, dites classes MOC (Managed Object Class). Un objet géré est une vue abstraite, définie pour les besoins de la gestion, d'une ressource logique ou physique d'un système. Chaque classe MOC représente un type donné desdits moyens du système 11. À chaque classe MOC peuvent être attachées une ou plusieurs instances d'objets gérés, appelées instances MOI (Managed Object Instance) et représentant des occurrences actuelles desdits moyens.

Le système d'administration 10 a une architecture de type client-serveur. Dans l'exemple illustré, les unités formant clients et serveurs dans le système d'administration 10 comprennent deux gestionnaires 17a formant serveurs et trois agents 17b formant clients. Une machine 12 incluant un gestionnaire est dite machine gestionnaire 12a et une machine incluant un agent est dite machine gérée 12b. Les gestionnaires 17a et les agents 17b sont reliés entre eux par l'intermédiaire du réseau 13. Dans l'exemple illustré, les deux gestionnaires sont reliés entre eux, l'un des gestionnaires 17a étant relié à deux des agents 17b tandis que l'autre est relié aux trois agents. Les liaisons entre gestionnaires et agents peuvent être très diverses. D'autre part, les communications entre gestionnaires et agents peuvent se faire selon un ou plusieurs protocoles, de préférence normalisés tels que les protocoles CMIP (déjà cité) et SNMP (System Network Management Protocol). Le protocole CMIP repose sur la norme ISO définissant les services pour le transfert des informations d'administration appelés services CMIS (Common Management Information Services).

Selon une option courante et avantageuse du système d'administration 10, un gestionnaire 17a gère aussi la machine gestionnaire 12a correspondante ou gère tout ou partie des machines gestionnaires. Cela peut se faire de façon similaire à celle illustrée précédemment, plus ou moins adaptée à cette option. L'exemple illustré offre le double avantage de faciliter la lecture des dessins tout en permettant à l'homme du métier de faire une généralisation du système décrit et illustré.

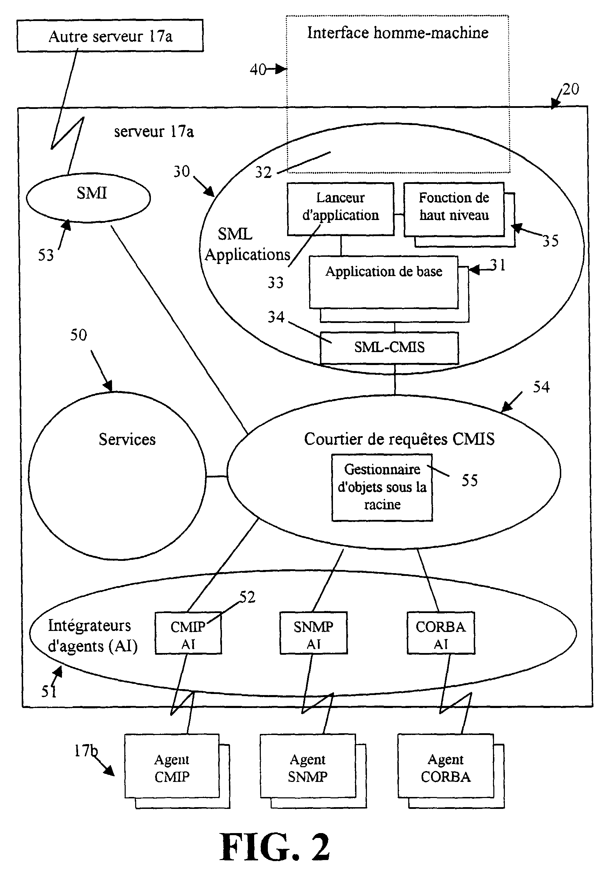

La figure 2 illustre la structure d'une plate-forme d'administration 20 du système d'administration 10. La plate-forme 20 peut être limitée à une machine gestionnaire 12a, ou être distribuée parmi plusieurs machines gestionnaires. Pour des raisons de commodité, la plate-forme illustrée dans la figure 2 sera limitée à une machine gestionnaire 12a et correspond ainsi au gestionnaire 17a, qui sera appelé serveur. Le serveur 20 se compose de cinq blocs fonctionnels : un bloc 30 d'applications SML ; un bloc 50 de services (non illustrés, par exemple de base de données, de journal d'alarmes et de journal d'événements) ; un bloc 51 d'intégrateurs d'agents 52 affectés à des protocoles respectifs tels que CMIP, SNMP et CORBA qui sont illustrés ; un bloc 53 d'interface avec un autre gestionnaire 17a ; et un bloc de communication 54 aussi appelé courtier de requêtes CMIS ou distributeur CMIS (CMIS Dispatcher) contenant notamment un gestionnaire 55 d'objets sous la racine ROOT (ROOT Object Manager). À cette racine sont attachés tous les objets créés, notamment les objets 18 des machines gérées 17b et ceux qui seront décrits ultérieurement.

Le bloc 30 d'applications connu inclut un ensemble d'applications de base 31 (core applications), une partie 32 d'une interface homme-machine 40, un tableau de bord 33, une interface 34 de communication avec le bloc 54, et un ensemble 35 de fonctions de haut niveau offrant des fonctions particulières. Dans l'exemple choisi, les applications 31 sont écrites dans le langage SML et communiquent avec le bloc 54, utilisant le protocole CMIP et le langage GDMO, par l'interface 34 qui est donc ici une interface SML/GDMO. L'interface 40 permet à un utilisateur de se connecter à la machine 12a pour démarrer et arrêter comme il le désire ses propres copies des applications de base 31.

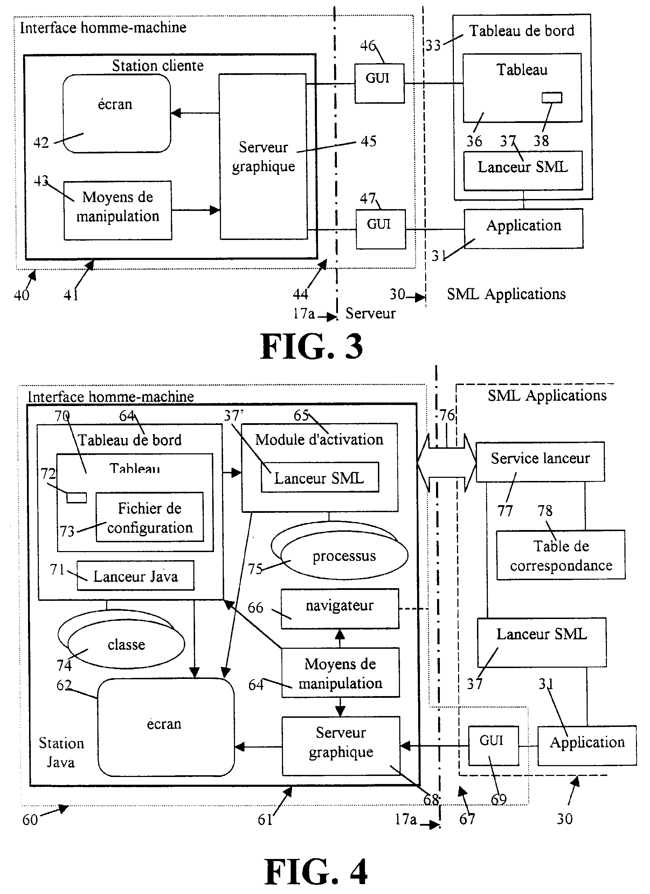

La figure 3 est une vue schématique de la structure d'une interface classique 40 en liaison avec une partie du bloc 30 du serveur 17a qui est concernée par l'interface 40. Dans le bloc 30, la partie non incluse dans l'interface 40 comprend le tableau de bord 33 et les applications 31. Les fonctions 35 sont aussi concernées de la même manière que les applications. De ce fait, pour des raisons de simplicité et de clarté de la description, les fonctions 35 ne sont pas décrites et illustrées. Le tableau de bord 33 comprend deux parties : une partie graphique formant un tableau 36 et une partie de commande appelée lanceur 37 pour lancer des requêtes en utilisant le langage SML. L'interface 40 comprend un client 41 formé d'une station extérieure au serveur 17a et connectée à lui. La station cliente 41 inclut un écran 42 et des moyens de manipulation 43 faits ordinairement d'un clavier et d'une souris. L'interface homme-machine 40 inclut une interface graphique classique 44 formée d'un serveur graphique 45 inclus dans la station cliente 41 et de clients graphiques 46 et 47 inclus dans le serveur d'administration 17a. L'interface graphique classique 44 exécute un système d'exploitation de type ouvert et adapté à servir d'interface graphique homme-machine, tel que celui connu sous son nom de marque UNIX MOTIF utilisé dans l'exemple choisi. Le serveur graphique 45 est connecté à l'écran 42, aux moyens de manipulation 43 et aux clients graphiques 46 et 47. Les clients graphiques sont connus sous le nom d'interfaces GUI (Graphic User Interface). L'interface GUI 46 est reliée au tableau 36 et il existe autant d'interfaces GUI 47 que d'applications 31 auxquelles elles sont respectivement reliées, une seule interface GUI 47 étant illustrée en liaison avec une application 31.

Le procédé classique mettant en oeuvre l'interface homme-machine 40 consiste d'abord à utiliser le client 41 à l'aide des moyens de manipulation 43 pour avoir accès au serveur graphique 45 afin d'avoir sur l'écran 42 le tableau 36. Ce tableau contient des icônes 38 représentatives des applications 31 et permettant de les lancer sélectivement au moyen du lanceur 37. Dans la figure 3, une seule icône est illustrée, représentative de l'application 31 illustrée. Les interfaces GUI 47 de l'exemple choisi permettent de rendre les applications correspondantes 31 sensibles au contexte affiché dans le tableau, tel que le nom et le type des objets sélectionnés dans le tableau et l'état de ces objets. Les applications 31 proposées aux utilisateurs pouvaient donc être adaptées au contexte. Par exemple, une application de découverte peut proposer la découverte des machines 12 connectées sur le réseau 13 ou un inventaire matériel et logiciel selon que l'objet sélectionné représente une connexion au réseau 13 ou une station de travail. Toute application utilise des verbes de l'interface programmatique, encore appelée interface API, qui sont nécessaires pour créer des fenêtres sur l'écran 42 et y présenter des objets graphiques tels que des boutons et des zones de texte. Tous ces verbes engendrent des requêtes, qui sont envoyées au serveur graphique 45. En réponse, ce serveur construit et présente les objets sur l'écran 42.

La figure 4 est une vue schématique de la structure d'une interface homme-machine 60 pour la mise en oeuvre du procédé de l'invention, en liaison avec la partie concernée du bloc 30 du serveur d'administration 17a. La structure de l'interface homme-machine 60 est mixte. D'une part, elle est faite d'une station Java 61, dite aussi station cliente ou client, extérieure au serveur d'administration 17a auquel elle est connectée. Elle inclut un écran 62, des moyens de manipulation 63, un tableau de bord Java® 64, un module d'activation 65 connu sous le nom Bean Activator dans l'environnement de Java, et un navigateur 66. D'autre part, l'interface homme-machine 60 inclut une interface graphique classique 67 similaire à l'interface classique 45 de la figure 3 et faite d'un serveur graphique 68 inclus dans la station cliente 61 et de clients graphiques (interfaces GUI) 69 inclus dans le serveur d'administration 17a.

Le tableau de bord 64 a une structure similaire à celle du tableau de bord 33 mais exécute le langage Java®. Il comprend un tableau 70 et un lanceur 71 pour lancer des applications 31 contenues dans le serveur d'administration 17a et ayant des interfaces GUI écrites en Java. Ces applications ne sont pas illustrées, puisqu'elles s'exécutent à partir du tableau de bord 64 de la même manière que les applications 31 de la figure 3 à partir du tableau de bord 33 et qu'elles ne posent donc pas de problème. Le problème résolu par le présent procédé vient des applications 31 qui ont encore des interfaces GUI classique 69, comme celle illustrée dans la figure 4. Le tableau 70 présente une fenêtre dans laquelle apparaissent des icônes 72 respectivement représentatives des applications 31 pouvant être lancées, une seule étant illustrée en correspondance avec l'application classique 31 illustrée. Il contient également un fichier de configuration 73. Le tableau de bord 64 utilisant le langage Java® fondé sur la technologie orientée objets, il est attaché à un ensemble de classes 74 représentatives de toutes les applications 31 et de toutes les icônes respectives 72. Le tableau de bord 64 est connecté à l'écran 62 et au module d'activation 65. Le module d'activation 65 est un composant logiciel manipulable par un éditeur graphique. Il est connecté à l'écran pour afficher les données demandées et est attaché à une instance de classe 75 représentative d'un processus qui tourne sur le serveur d'administration 17a. Les moyens de manipulation 63 sont connectés au tableau de bord 64, au navigateur 66 et au serveur graphique 68. Le navigateur est relié par une liaison illustrée en un trait discontinu à un serveur HTML (non représenté) bien connu de l'homme du métier.

Dans le bloc 30 (SML Applications) du serveur d'administration 17a, le tableau 36 du tableau de bord 33 qui était utilisé dans la structure classique de la figure 3 ne sert plus et peut être désactivé ou supprimé. Le lanceur SML 37 est conservé tandis qu'au moins une partie fonctionnelle 37' de ce lanceur est aussi reproduite dans le module d'activation 65. Le lanceur 37' sert au tableau de bord 64 pour lancer des applications 31 non adaptées à Java®.

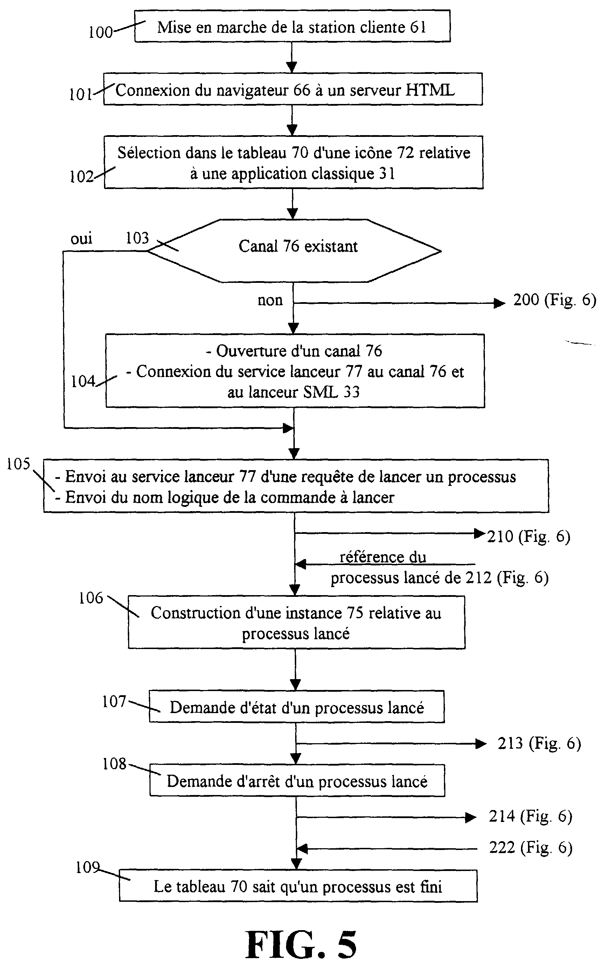

La figure 5 est un organigramme relatif à la station cliente 61 pour illustrer un exemple de mise en oeuvre du procédé de l'invention. Le procédé commence à l'étape 100 de la figure 5 lorsqu'un utilisateur veut se servir de la station cliente 61. À l'étape 101, il utilise le navigateur 66 pour obtenir de manière classique sur l'écran 62 une page d'accueil dans laquelle il peut sélectionner le site du serveur HTML non représenté. Sur ce site, le navigateur 66 lit une page pour amener le programme Java® (nomme 〈〈 applet 〉〉) sur la station 61.

Le tableau 70 du tableau de bord 64 présente toutes les icônes 72 représentatives de toutes les applications 31 respectives classiques et nouvelles (écrites en Java®). À chaque icône 72 correspond une classe Java 74 à instancier pour lancer un processus. Cependant, si une application 31 est classique, l'icône 72 correspond à une instance d'une classe particulière 74, appelée par exemple "ism.alienbean.Action".

À l'étape 102 de l'organigramme de la figure 5, l'utilisateur sélectionne l'icône 72 représentative de l'application 31 classique illustrée et correspondant donc à une instance la classe particulière 74. L'application 31 étant classique, elle doit être lancée par l'intermédiaire du lanceur SML 33 du serveur 17a.

À l'étape 103, la station cliente vérifie si elle peut communiquer avec le serveur 17a. La station 61 venant d'être mise en marche, aucune demande de communication n'a pas encore pu avoir lieu.

L'étape 104 consiste à faire une requête pour établir une communication entre le module d'activation 67 et le lanceur SML 33. Le but de cette étape est de donner au tableau de bord 65 un accès au lanceur 37. La communication est établie par un canal de communication 76, utilisant une liaison physique (confondue avec la liaison illustrée 76 et permettant un dialogue entre le client 61 utilisant le langage Java® et le serveur 17a utilisant le langage SML. Ce canal est disponible dans le produit OpenMaster® du demandeur, dans lequel il est appelé canal SOW (SML Object Wrapper).

Dans l'étape 104 est aussi raccordé au canal 76 du code SML qui va fournir un ensemble de fonctions spécifiques, cet ensemble étant nommé service SOW ou service lanceur 77. Le client 61 qui voudra obtenir une de ces fonctions va établir un canal de communication 76 avec le service lanceur et solliciter la fonction choisie. On verra ultérieurement que les fonctions disponibles sont : lancer une commande ; quel est l'état d'une commande lancée ; et stopper une commande. Le service lanceur 77 est connecté au lanceur 37 pour lancer les applications 31 classiques. Les noms des fonctions du service lanceur 77 sont définis dans le serveur 17a et sont connus du module d'activation 65 du client 61.

La fourniture des fonctions du service lanceur 77 se fait d'une manière analogue à l'appel de procédure à distance connu ordinairement sous le nom d'appel RPC (Remote Procedure Call). Le serveur 17a peut ainsi exporter un service défini par le client 61 comme suit :
(1) le client 61 se connecte sur le service défini par sélection sur l'écran 62, le service désiré ici étant le service lanceur" ;
(2) le client 61 envoie au serveur 17a une requête pour appeler une fonction du service, par exemple "Lancer la commande du lanceur 37", en lui transmettant les paramètres requis ; et
(3) le serveur 17a exécute la requête et retourne les données issues du service.

À la fin de l'étape 104, le canal 76 est en place pour faire une communication entre le client 61 et le serveur 17a. Il est à noter que le service lanceur 77 étant activé, il est à l'écoute des requêtes faites par tous les clients, plusieurs clients pouvant être présents dans la station. Il est aussi à noter que le tableau de bord 64 permet à un utilisateur de la station 61 de lancer une fonction, telle que lancer ou stopper une application 31, sans que l'utilisateur ait à connaître l'endroit où la fonction s'exécute. Une fonction Java® s'exécute directement sur la station cliente 61, tandis qu'une fonction SML doit s'exécuter sur le serveur 17a par l'intermédiaire du canal 76 et du service lanceur 77. Le fait qu'une fonction soit distante ou locale est connu par une indication correspondante incluse dans le fichier de configuration 73 contenu dans le tableau 70. L'étape 104 correspond donc à l'étape (1) d'un appel RPC tel que décrit précédemment.

Plus généralement, si à l'étape 103 la station cliente 61 a déjà ouvert un canal 76, l'étape 104 est shuntée.

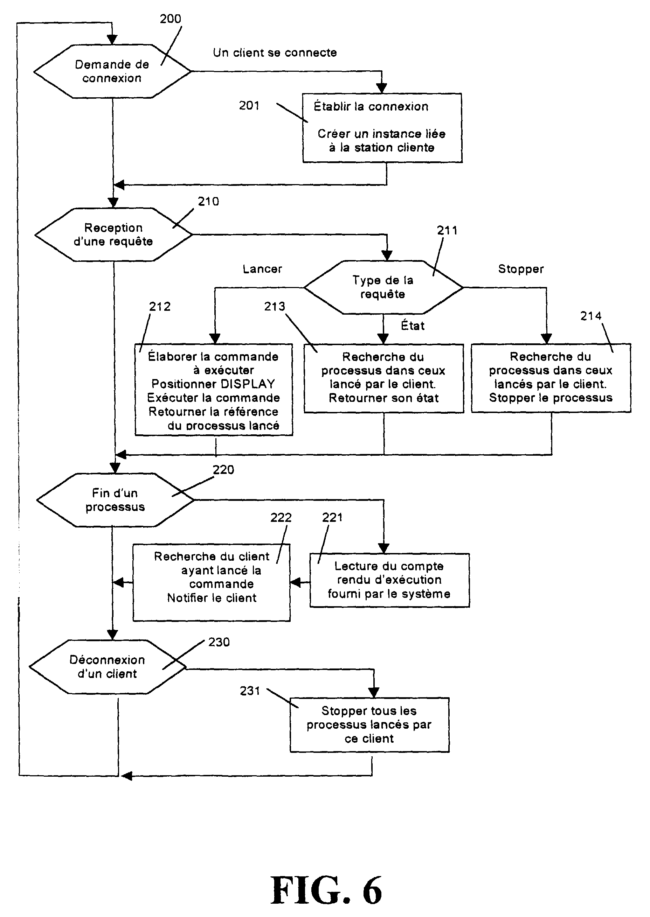

La figure 6 est un organigramme illustrant le fonctionnement du service lanceur 77. À l'étape 200, le service lanceur 77 reçoit la requête de connexion faite par le client 61. La requête de connexion est traitée à l'étape 201 pour établir la connexion et créer une instance liée à la station cliente et représentative de toutes les informations relatives à la communication avec la station cliente, telles que l'adresse de la station et les processus lancés par la station.

À l'étape 105 de la figure 5, le module d'activation 64 envoie au service lanceur 77 une requête pour que le lanceur SML 33 lance un processus. Le module d'activation 64 et ainsi la partie cliente du service lanceur 77. Le service lanceur reçoit la requête à l'étape 210 de la figure 6 et vérifie à l'etape 211 quel est le type de la requête. La requête étant un lancement de processus, elle est traitée dans l'étape 212. Cette étape comprend quatre opérations.

La première opération consiste à élaborer la commande à exécuter. Pour l'élaboration de la commande, le client 61 à l'étape 105 envoie aussi le nom logique de l'application 31 concernée. Ainsi, il n'a pas à transmettre directement la commande (commande de système) à lancer. Ceci rend la station cliente 61 indépendante de la réalisation réelle de l'application sur le serveur (indépendante du fabricant et de la version, notamment). Le service lanceur 77 dispose d'une table 78 de correspondance entre le nom logique de l'application et la commande à exécuter. Pour faire cette correspondance, le service lanceur 77 utilise des fichiers de description qui contiennent toutes les données nécessaires. Un fichier de description, nommé "cmdism.desc" est donné ci-dessous à titre d'exemple.

### CMDDESC: horloge

- EXEC: xclock

### CMDDESC: LogAsismadm

- LOGIN: ismadm
- EXEC: xterm -name ismadm

### CMDDESC: ism

- LOGIN: ismadm
- SHELL: /bin/ksh
- SETVAR: LAUNCHED_BY=ShellScriptServer
- EXEC: ${ISMROOT}/bin/start_ism > /dev/null 2>&1
- LOG: /var/scriptserver/log/ism

Ce fichier de description utilise les mots clés suivants, extraits du vocabulaire UNIX :
- LOGIN: Facultatif. C'est le compte sous lequel la commande doit être exécutée.
- SHELL: Facultatif. C'est l'interpréteur de commande qui doit être utilisé pour lancer la commande. Par défaut c'est l'interpréteur de commande associé à l'utilisateur défini par LOGIN. Sinon, par défaut c'est "/bin/sh"
- SETVAR: Facultatif. Variable d'environnement initialisée avant la lecture d'un fichier d'environnement propre à l'utilisateur, nommé ici ".profile". Elle permet de conditionner, dans une condition 〈〈if〉〉, des séquences du fichier ".profile" qui pourraient ne plus être adéquates avec le mode de fonctionnement.
- EXEC: Commande à exécuter. Il s'agit un fait d'un script interprété par l'interpréteur de commande (appelé aussi "shell script", qui peut comporter plusieurs instructions. Ce script s'exécute avec l'environnement de l'utilisateur défini par LOGIN, ce qui explique l'usage de $ { ISMROOT} dans le fichier de description précédent.
- LOG: Facultatif. Nom du fichier où les lancements sont tracés.

Le nom logique d'une commande est l'association du nom du fichier et du nom d'une entrée dans ce fichier. Dans l'exemple précédent, le fichier "cmdism.desc" définit trois commandes :
cmdism.desc/horloge, cmdism.desc/LogAsismadm et cmdism.desc/ism
où horloge, LogAsismadm et ism sont des entrées.

Le service lanceur 77 utilise le fichier de description et élabore la commande à exécuter conformément à la première opération dans l'étape 212. Avant de lancer cette commande, le service lanceur 77 effectue la seconde opération consistant à positionner la variable d'environnement 〈〈DISPLAY〉〉 de UNIX® de façon que tous les affichages sous UNIX MOTIF® aient lieu sur la station cliente 61. La variable DISPLAY donne à l'interface GUI correspondante 69 l'adresse de réseau du serveur graphique 68 destinataire des ordres d'affichages de l'application. Une fois lancée, l'application UNIX MOTIF crée ses propres objets graphiques et les visualise via le serveur graphique 68 de la station cliente. Pour que l'affichage ait lieu, il faut que dans la station cliente le serveur graphique 68 soit actif. Sinon le processus applicatif envoie un message d'erreur et s'arrête. Pour détecter si le serveur graphique 68 est actif, le service lanceur établit une communication unidirectionnelle, appelée 〈〈pipe〉〉 dans le vocabulaire UNIX, entre lui et les sorties logicielles "standard" et "erreur" du processus lancé, respectivement nommées *stdout* et *stderr* dans le vocabulaire UNIX®. Si l'application 31 ne peut pas se connecter au serveur graphique 68, le service lanceur envoie un message 〈〈Impossible d'ouvrir l'affichage (Can't open display)〉〉 sur sa sortie d'erreur. Le service lanceur 77 est ainsi à l'écoute de tout ce qui sort du processus et recherche les messages d'erreur possibles et indiquera cette cause lors de la notification de la fin du processus.

À la troisième opération de l'étape 212 le service lanceur 77 exécute la commande. Le service lanceur 77 transmet en réponse une référence sur le processus lancé relatif à l'activation du lanceur, comme dans les étapes (2) et (3) de l'appel RPC décrit précédemment.

A l'étape 106 de la figure 5, la station reçoit la référence du processus lancé et construit dans le module d'activation 65 une instance d'une classe 75, qui est l'image du processus lancé. La classe 75 correspondante est appelée par exemple "ism.alienbean.Launcher. Les méthodes de cette classe permettent à un programme Java du module d'activation 65 de connaître l'état du processus et de le stopper.

Grâce à la classe 75, la station cliente a une image du processus lancé et l'utilisateur du tableau de bord 64 peut connaître l'état du processus (étape 107) ou l'arrêter (étape 108). Le client 61 n'a qu'à désigner le processus via l'instance 75. Une requête correspondant à l'état et une autre correspondant à l'arrêt sont ainsi envoyées au service lanceur 77, qui a ainsi en même temps la référence du processus. L'exécution de ces deux requêtes sont respectivement faites dans les étapes 213 et 214 de la figure 6. Le service lanceur 77 recherche le processus parmi ceux lancés par le client qu'il connaît grâce aux informations relatives à l'instance créée à l'étape 201, et dans l'étape 213, il retourne au client l'état demandé ou, dans l'étape 214, il stoppe le processus.

À l'étape 220, le service lanceur détecte la fin d'un processus. La fin peut être la fin normale du processus ou l'arrêt du processus demandé par le client ou non. Dans ce cas, à l'étape 221, le service lanceur prélève et lit le compte rendu d'exécution fourni par le système UNIX exécuté par la machine gestionnaire 12a. Puis, à l'étape 222 il recherche le client ayant lancé la commande grâce aux informations recueillies à l'étape 201 et notifie à la station cliente 61 le compte rendu d'exécution. A l'étape 109 de la figure 5 la notification est présentée à l'instance 75, de sorte que l'utilisateur peut savoir du tableau 70 que le processus est fini.

Le service lanceur 77 surveille ses clients. Lorsque la communication 76 est rompue, il le constate à l'étape 230 et, à l'étape 231 il stoppe tous les processus lancés par le client qu'il connaît grâce à l'instance créée à l'étape 201.

Un autre problème se présente lorsqu'un utilisateur désire de rendre le comportement de l'application sensible au contexte. On a vu précédemment que dans l'exemple choisi, le procédé antérieur permettait facilement de rendre le comportement de l'application sensible au contexte. Par exemple, si l'utilisateur désignait un routeur sur le tableau de bord et qu'il appelle une application de découverte, l'application doit lui proposer la découverte des objets sur le réseau. De même, s'il désignait une machine UNIX®, l'application doit proposer l'inventaire du matériel et du logiciel installés. L'application 31 demandait au lanceur 37 de la figure 3 quels étaient les objets sélectionnés et le lanceur pouvait donner les caractéristiques des objets sélectionnés grâce à l'interface GUI 46. En utilisant l'interface 60 de la figure 4, le lanceur 37 peut recevoir les caractéristiques des objets, mais il ne dispose plus d'une interface GUI lui permettant d'avoir les objets sélectionnés puisqu'ils existent dans l'environnement Java®.

La solution proposée consiste à créer un pseudo-tableau de bord 33' dans le bloc 30 SML Applications du serveur d'administration 17a.

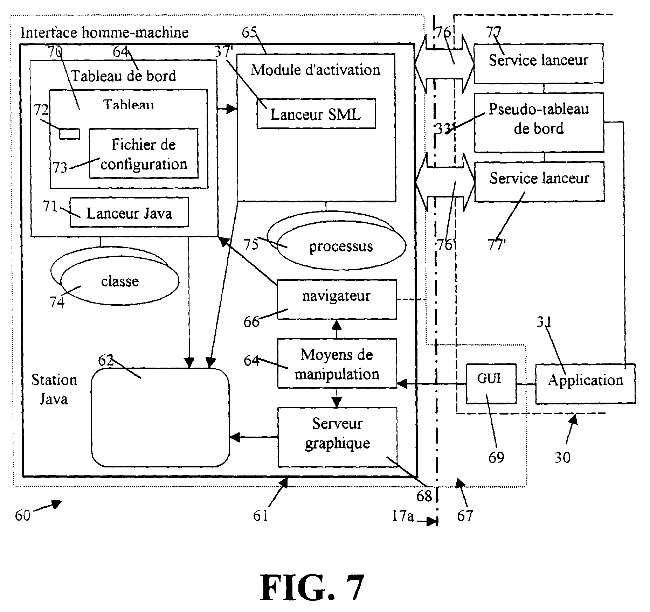

La figure 7 illustre un exemple de structure d'interface homme-machine 60 pour la mise en oeuvre pour la solution proposée. Dans la figure 7, les composants communs avec ceux de la figure 4 sont désignés par les mêmes chiffres de référence. La structure de la figure 6 a comme éléments additionnels un pseudo-tableau de bord 33' situé dans le serveur 17a et relié au service lanceur 77, un second service lanceur 77' et un second canal de communication 76' reliant le pseudo-tableau de bord 33' au module d'activation 65, dont le but est de transmettre au pseudo-tableau de bord l'ensemble des données représentatives des objets sélectionnés dans le tableau 70. Le pseudo-tableau de bord 33' a une structure similaire à celle du tableau de bord 33 de la figure 3 et n'est pas connecté à une interface GUI. En d'autres termes, le lanceur 37 de la figure 4 est inclus dans le pseudo-tableau de bord 33'. Pour des raisons de clarté, la table de correspondance 78 a été omise dans la figure 7 et est en réalité maintenue. Pour les mêmes raisons, la table de correspondance en liaison avec le second service lanceur 77' n'est pas aussi illustrée. Bien sûr, le pseudo-tableau de bord 33' pourrait cohabiter avec le lanceur 37 de la figure 4, le pseudo-tableau 33' n'étant alors utilisé pour les applications 31 souhaitées sensibles au contexte.

Le pseudo-tableau de bord 33' est une image partielle du tableau de bord 33 de la figure 3, sans la fonction d'affichage GUI 46. Par contre, l'interface entre le pseudo-tableau de bord et les applications 31 est identique au tableau de bord 33 et fournit les mêmes verbes et noms de méthode. Le module d'activation 65 est commandé pour communiquer avec le pseudo-tableau de bord 33' et lui transmettre les références de objets sélectionnés dans le tableau 70 de la station cliente 61. Ainsi, le pseudo-tableau de bord est apte à répondre aux interrogations des applications sur la nature des objets sélectionnés.

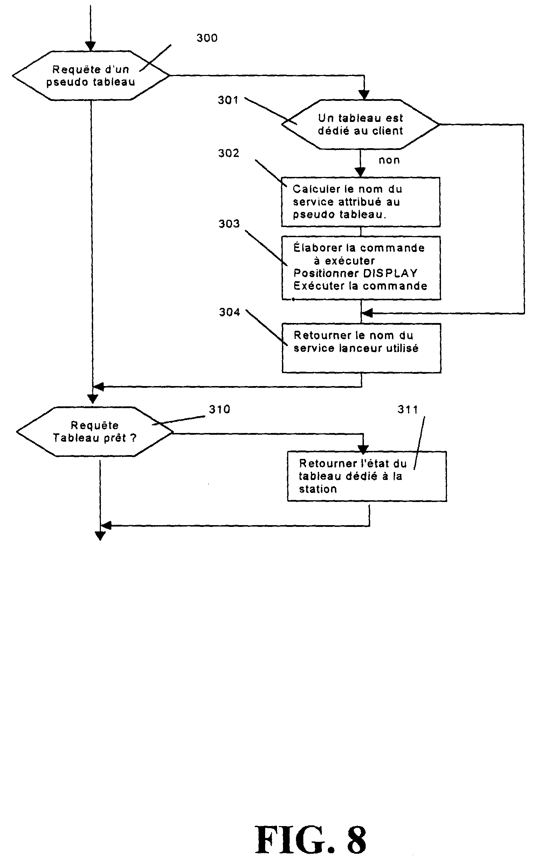

La figure 8 est un organigramme illustrant une succession d'opérations pour servir d'exemple de réalisation du procédé, ces opérations complétant celles de l'organigramme de la figure 6 relative au service lanceur 77. On suppose que le tableau de bord 64 de la station 61 instancie une classe 71 attachée au module d'activation 65 et représentative d'un processus (une application comprenant au moins un processus). Le module d'activation 65 crée le canal 72 de communication avec le service lanceur 77 et envoie au service lanceur 77 une requête pour qu'il lance le pseudo-tableau de bord 33'. La réception de la requête constitue l'étape 300 de la figure 8. Le service lanceur vérifie à l'étape 301 si un pseudo-tableau est déjà dédié au client 61 ou non. En fait, d'une manière générale, un pseudo-tableau de bord est dédié à une station cliente 61, mais il peut travailler pour le compte de plusieurs tableaux de bord sur la même station. S'il n'existe pas de pseudo-tableau de bord, le service lanceur 75 à l'étape 302 calcule le nom du service à attribuer au pseudo-tableau de bord 33'. Puis, à l'étape 303, le service lanceur élabore la commande à exécuter, positionne la variable DISPLAY et exécute la commande, de la même façon qu'à l'étape 212 de l'organigramme représenté sur la figure 6. L'étape 304 qui suit est prise après exécution de l'étape 303 ou si un pseudo-tableau de bord 33' est déjà dédié à la station cliente 61. Dans les deux cas, le service lanceur 77 envoie à la station 61 la référence du processus lancé. Dans cette étape aussi, le service lanceur 77 détermine un nom du service lanceur qui sera propre au pseudo-tableau de bord 33' et lui envoie. Ce second service lanceur 77' permettra au pseudo-tableau de bord 33' de communiquer avec la station par l'intermédiaire du second canal 76'. Cependant, le pseudo-tableau de bord ne peut pas encore communiquer directement avec la station 61 à travers le second canal 76' puisque la station ne connaît pas encore le nom du second service lanceur 77'. Le nom de ce service doit être unique. À l'étape 310, le service lanceur 77 attend que le pseudo-tableau de bord soit prêt, puisque plusieurs minutes peuvent être nécessaires. Dès qu'il le sait, il envoie à l'étape 311 le nom du second service lanceur 77' au module 65 et l'état du pseudo-tableau de bord 33' dédié au tableau de bord 64 de la station. La station peut alors communiquer avec le second service lanceur 77' par l'intermédiaire du second canal 76'.

Le pseudo-tableau de bord peut aussi conserver des fonctions qui étaient disponibles sur le tableau de bord classique 33 de la figure 3. Parmi les applications utilisant l'ancien tableau de bord, certaines s'exécutaient dans le même processus. Comme elles partageaient le même espace, elles pouvaient ajouter des objets graphiques dans le tableau de bord et plus précisément des menus de commandes qui étaient présentés par le tableau de bord mais construits par les applications.

Pour ajouter cette fonction au pseudo-tableau de bord 33', le procédé consiste à rechercher comment l'application lancée crée des menus afin de connaître les commandes devant apparaître dans ces menus. Le pseudo-tableau de bord 33' redéfinit ou surcharge les méthodes utilisées pour construire les menus de façon connaître la structure des menus et les fonctions appelées〈〈 callbacks 〉〉 associées, qui sont les fonctions à activer lorsqu'un élément du menu est désigné. Ces informations sont transmises au module d'activation 65, qui peut ainsi construire des menus Java® et les présenter au tableau 70 pour être utilisés par un utilisateur. D'autre part, le menu peut être sensible aux objets sélectionnés dans le tableau. Suivant le type de l'objet, certaines lignes du menu peuvent ainsi être grisées pour indiquer que la fonction associée n'est pas disponible ou n'est pas appropriée.

Lorsque le tableau de bord 64 doit afficher un tel menu, il sollicite le module 65 à interroger le pseudo-tableau de bord dédié a la station. Le pseudo-tableau utilise la description du menu pour appeler les fonctions autorisant ou non une ligne du menu. Il retourne au module 65 la série d'indicateurs d'autorisation des lignes du menu. Le module 65 est alors capable de construire le menu en tenant compte des lignes grisées et de le présenter sur le tableau de bord.

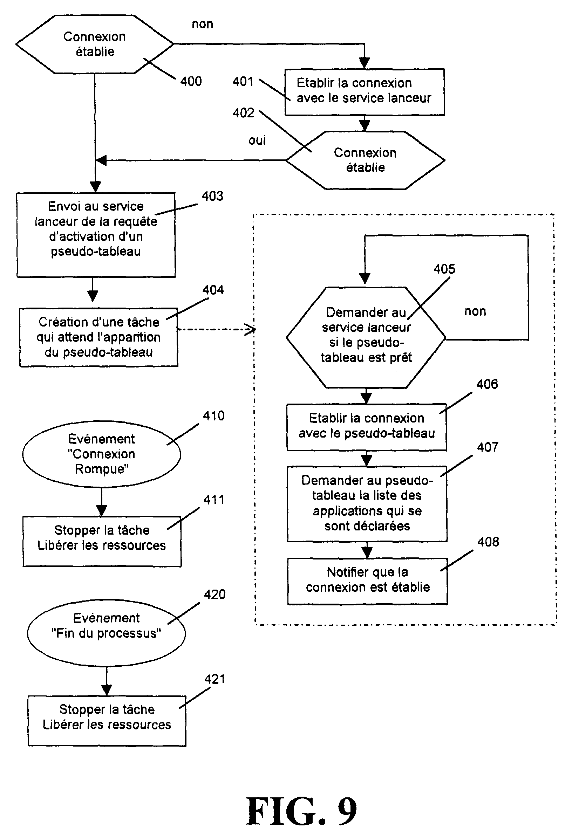

La figure 9 est un organigramme illustrant un exemple de fonctionnement du module d'activation 65 dans la structure de la figure 7 incluant un pseudo-tableau 33'. Le module d'activation 65 appelé 〈〈bean activator〉〉 est un mécanisme Java qui s'exécute sur la station cliente 61 et prend en charge toutes les communications permettant au tableau de bord 64 d'activer et de commander des applications s'exécutant sur le serveur 17a. Le module 65 respecte les règles définies par le tableau de bord 64. Pour le tableau de bord 64, le module 65 est une classe 69 banale.

À l'étape 400, le module 65 vérifie s'il existe une connexion avec le canal 76, le service lanceur 77 étant déjà activé dans le serveur 17a. Si elle n'existe pas, il initialise aux étapes 401 et 402 le canal de communication avec le serveur 17a à la première instanciation d'une classe par le tableau de bord. À l'étape 403, il envoie au service lanceur une requête d'activation du pseudo-tableau de bord. L'activation du pseudo-tableau de bord pouvant demander un temps relativement long, le module crée à l'étape 404 une tâche qui attend l'apparition du pseudo-tableau de bord. L'étape 405 consiste à demander au service lanceur 77 si le pseudo-tableau est prêt. L'étape dure jusqu'à ce qu'il soit prêt. Étant prêt, le module établit à l'étape 406 la connexion avec le pseudo-tableau puis, à l'étape 407, il demande au pseudo-tableau la liste des applications qui se sont déclarées et notifie à l'étape 408 que la connexion est établie. Une fois la communication établie, le module s'abonne à un événement nommé 〈〈connexion rompue〉〉 (étape 410) afin de connaître l'état réel de la connexion. La disparition de la connexion ramène le module dans son état initial. À l'étape 411, il arrête les tâches et libère les ressources.. Le module rétablira si possible la connexion à la prochaine sollicitation du tableau de bord. Il s'abonne aussi à un événement appelé "fin de processus" (étape 420). À la fin d'un processus, il stoppe la tâche et libère les ressources (étape 421).

D'une manière générale, on peut donc dire que l'invention a pour objet un procédé de commande, à partir d'un tableau de bord 64 sur un écran 62 d'une station cliente 61, d'un processus 31 s'exécutant sur un serveur 17a, le processus étant commandé par un lanceur 37 et attaché à une interface graphique 67 incluant dans le serveur 17a un serveur graphique 68 connecté audit écran et dans la station cliente 61 un client graphique 69 attaché au processus. L'invention répond au problème posé par le fait que le tableau de bord est adapté à la commande directe de processus autres que ledit processus et est incompatible avec le lanceur et l'interface graphique du processus. Le procédé consiste à définir dans le serveur un service 77 lanceur de fonctions de commande connues du tableau de bord et adaptées à la commande du lanceur, à établir un canal 76 de communication entre la station cliente et le serveur, le canal permettant un dialogue entre le tableau de bord et le service, à envoyer au service, à partir du tableau de bord et à travers le canal, la commande du processus, à traiter dans le service la commande pour la faire exécuter par le lanceur, et à donner au client graphique l'adresse du serveur graphique pour que le serveur graphique produise sur l'écran un affichage de données relatives au processus.

Le procédé peut être amélioré par des caractéristiques accessoires.

Ainsi, de préférence, l'envoi de la commande consiste à envoyer au service le nom logique de la commande, et son traitement par le service consiste à faire une correspondance dans une table 78 entre le nom logique de la commande et la commande à exécuter. Accessoirement, le procédé consiste à élaborer le nom logique de la commande à partir du nom d'un fichier de description (cmdism.desc) et du nom d'une entrée (horloge) dans ce fichier et à faire la correspondance à partir du fichier de description.

Bien que non nécessaire aussi, la commande à partir du tableau de bord est couramment faite en sélectionnant une icône 72 représentative du processus. Dans le cas où le tableau de bord est fondé sur un langage de programmation orientée objets, tel que Java®, le procédé peut avantageusement consister à faire correspondre une icône à une instance de classe 74 particulière (ism.alienbean.Action) représentative de tous les processus disponibles non adaptés au tableau de bord.

Il peut être aussi intéressant à ce que le traitement de la commande par le service consiste à envoyer au tableau de bord une notification de la référence du processus qui s'exécute et à ce que la station cliente génère une instance d'une classe 75 qui est l'image du processus lancé et qui permet au tableau de bord de connaître l'état du processus et de le stopper.

On a vu aussi une caractéristique accessoire mais très intéressante, qui consiste à rendre le processus sensible au contexte, en demandant au service 77 de créer dans le serveur 17a un pseudo-tableau de bord 33' incluant le lanceur 37 et un tableau 36 adapté au lanceur, de créer un second service associé au pseudo-tableau de bord et d'établir un canal 72' de communication entre le tableau de bord 64 et le pseudo-tableau 33'.

De même, si le processus crée un menu, il est intéressant que le pseudo-tableau recherche la structure du menu créé et les fonctions d'activation associées et les envoie à la station cliente pour qu'elle construise et présente sur le tableau de bord un menu similaire pouvant être activé à partir du tableau de bord.

## Revendications

1. Procédé de commande, à partir d'un tableau de bord (64) sur un écran (62) d'une station cliente (61), d'un processus (31) s'exécutant sur un serveur (17a), le processus étant commandé par un lanceur (37) et attaché à une interface graphique (67) incluant dans le serveur (17a) un serveur graphique (68) connecté audit écran et dans la station cliente (61) un client graphique (69) attaché au processus, caractérisé en ce que le tableau de bord étant adapté à la commande directe de processus autres que ledit processus et étant incompatible avec le lanceur et l'interface graphique du processus, il consiste à définir dans le serveur un service (77) lanceur de fonctions de commande connues du tableau de bord et adaptées à la commande du lanceur, à établir un canal (76) de communication entre la station cliente et le serveur, le canal permettant un dialogue entre le tableau de bord et le service, à envoyer au service, à partir du tableau de bord et à travers le canal, la commande du processus, à traiter dans le service la commande pour la faire exécuter par le lanceur, et à donner au client graphique l'adresse du serveur graphique pour que le serveur graphique produise sur l'écran un affichage de données relatives au processus.

2. Procédé selon la revendication 1, caractérisé en ce que l'envoi de la commande consiste à envoyer au service le nom logique de la commande, et son traitement par le service consiste à faire une correspondance dans une table (78) entre le nom logique de la commande et la commande à exécuter.

3. Procédé selon la revendication 2, caractérisé en ce qu'il consiste à élaborer le nom logique de la commande à partir du nom d'un fichier de description (cmdism.desc) et du nom d'une entrée (horloge) dans ce fichier et à faire la correspondance à partir du fichier de description.

4. Procédé selon l'une des revendications 1 à 3, caractérisé en ce que la commande à partir du tableau de bord est faite en sélectionnant une icône (72) représentative du processus.

5. Procédé selon la revendication 4, caractérisé en ce que le tableau de bord étant fondé sur un langage (Java®) de programmation orientée objets, il consiste à faire correspondre l'icône à une instance de classe (74) particulière (ism.alienbean.Action) représentative de tous les processus disponibles non adaptés au tableau de bord.

6. Procédé selon l'une des revendications 1 à 5, caractérisé en ce que le traitement de la commande par le service consiste à envoyer au tableau de bord une notification de la référence du processus qui s'exécute et en ce que la station cliente génère une instance d'une classe (75) qui est l'image du processus lancé et qui permet au tableau de bord de connaître l'état du processus et de le stopper.

7. Procédé selon l'une des revendications 1 à 6, caractérisé en ce qu'il consiste à rendre le processus sensible au contexte en demandant au service (77) de créer dans le serveur (17a) un pseudo-tableau de bord (33') incluant le lanceur (37) et un tableau (36) adapté au lanceur, de créer un second service associé au pseudo-tableau de bord et d'établir un canal (72') de communication entre le tableau de bord (64) et le pseudo-tableau (33').

8. Procédé selon la revendication 7, caractérisé en ce que le processus créant un menu, le pseudo-tableau recherche la structure du menu créé et les fonctions d'activation associées et les envoie à la station cliente pour qu'elle construise et présente sur le tableau de bord un menu similaire pouvant être activé à partir du tableau de bord.

9. Interface homme-machine (60) entre une station cliente (61) et un serveur (17a), caractérisée en ce qu'elle met en oeuvre le procédé défini par l'une des revendications précédentes.

10. Système informatique (10, 11) incluant au moins un serveur (17a) destiné à exécuter un processus par au moins un processeur (14) à partir d'un tableau de bord (64) d'une station cliente (61), caractérisé en ce qu'il met en oeuvre le procédé défini par l'une des revendications précédentes.
